# EUROPEAN PATENT SPECIFICATION

(11) **EP 1 428 708 B1**
(45) Date of publication and mention of the grant of the patent: **29.06.2005**
(21) Application number: 03257822.1
(22) Date of filing: 12.12.2003
(51) Int. Cl.: B60J 5/06, B60J 7/10

(54) **Tension curtain for utility vehicles**
Spannbarer Vorhang für Nutzfahrzeuge
Rideau tendable pour véhicules utilitaires

(30) Priority: 12.12.2002 GB 0228921
(43) Date of publication of application: 16.06.2004
(73) Proprietor: Andrew Mitchell & Company Limited, Port Glasgow, Renfrewshire PA14 6TD (GB)
(72) Inventor: Jeffkyns, Kevin Joseph, Andrew Mitchell & Co. Ltd, Glasgow G33 4TT (GB)
(74) Representative: Appleton, Ben

(56) References cited:
- EP-A- 0 153 030
- GB-A- 1 542 812
- US-A- 3 709 552
- US-A- 5 111 867

## Description

### Field of the Invention

The present invention relates to tension curtains, in particular to tension curtains for vehicular use. The present invention also relates to material sheets, tension elements and attachment means for attaching tension curtains to a support structure, all suitable for vehicular use. The present invention further relates to vehicles incorporating tension curtains, and to a method of renewing tension curtains.

### Background to the Invention

Tension curtains are suitable for use as the sides of otherwise open-sided lorries or vans. When the tension curtain is unstressed it can be easily drawn aside to allow loading/unloading through an open side of the vehicle. Extending the tension curtain across the open side of the vehicle and applying tension holds the tension curtain in place. This forms a barrier to protect a vehicle load from rain, etc. and to hinder unauthorised access to the vehicle load. Known vehicle tension curtains comprise a sheet of plastics material such as PVC, reinforced with tension elements. The tension elements comprise PVC coated webbing straps. The sheet is supported at its upper edge on an upper support structure such as a rail. The sheet can be drawn along the rail when unstressed. Tension is applied to each tension element through a buckle attached thereto. Straps fixed in place on a lower support structure of the vehicle are used in combination with the buckles to apply tension to the tension elements, and thereby hold the tension curtain in place.

However, plastics materials can degrade over time through exposure to sunlight and other environmental factors. Furthermore, vandalism or unauthorised attempts to gain access to the vehicle load can cause damage to the sheet material. This degradation and/or damage means existing vehicle tension curtains must be frequently replaced. Frequent replacement of tension curtains adds to the expense of operating a vehicle.

EP 0153030 describes a curtain sided van body in which the closed curtain is tensionable in the vertical plane by horizontally-spaced vertical straps having bottom tail portions which are threaded through tensioning devices or buckles and which terminate in hooks engageable with the van body rave or bottom rail. The van body is characterised in that the strap tail portions and hooks are restrained into contact with the curtain exterior such that, with the curtain in closed position, release of the tensioning devices allows the hooks to drop clear of the van body rave while engagement thereof elevates the hooks into securing abutment with the van body rave.

It is an aim of preferred embodiments of the present invention to overcome at least some of the disadvantages of the prior art, whether identified herein or otherwise.

### Summary of the Invention

According to a first aspect of the present invention there is provided a tension curtain comprising: a tension element and a material sheet, wherein, the tension element is releasably coupleable to the material sheet; and characterised in that the tension element comprises part of a secondary sheet.

Preferably, the tension curtain further comprises first attachment means coupled to the tension element, wherein the first attachment means is suitable for attaching the tension curtain to a first support structure. Preferably, the first attachment means comprises a hanger assembly suitable for attaching the tension curtain to a support rail.

Preferably, the tension curtain further comprises second attachment means, wherein the second attachment means is suitable for attaching the tension curtain to a second support structure. Preferably, the second attachment means comprises a strap suitable for attaching the tension curtain to a buckle. The second attachment means may be coupled to the tension element, alternatively, the tension element may comprise the second attachment means.

Preferably, the first and second support structures comprise upper and lower support structures respectively.

Suitably, the material sheet comprises a plastics material. Preferably, the material sheet comprises PVC. Preferably, the material sheet comprises an upper reinforcement member.

Preferably, the tension element is arranged, in use, to reinforce the material sheet. Preferably, the tension element is arranged, in use, to reinforce the material sheet from bottom to top.

Preferably, the tension element comprises a PVC coated webbing strap. Preferably, the tension element is integral with the secondary sheet. Preferably, the tension element is bonded to the secondary sheet by high frequency welding. Alternatively, the tension element is sewn into the secondary sheet. Preferably, the secondary sheet comprises a mesh sheet. Preferably, the secondary sheet comprises a PVC coated mesh sheet. Preferably, the secondary sheet comprises upper and lower reinforcement members. Preferably, the upper and lower reinforcement members are included at the upper and lower edges of the secondary sheet. Preferably, the upper and lower reinforcement members run along the length of the upper and lower edges of the secondary sheet. Preferably, the upper and lower reinforcement members comprise PVC coated webbing straps. Preferably, the tension element is arranged to run between the upper and lower edges of the secondary sheet. Preferably, the tension element is arranged in use to run substantially vertically.

Preferably, the material sheet and secondary sheet are arrangeable, in use, to be substantially co-planar. Suitably, the material sheet is larger than the secondary sheet to and is arrangeable in use to extend beyond at least one edge of the secondary sheet. Alternatively, the material sheet is substantially the same size as the secondary sheet to and is arrangeable in use to reinforce substantially the whole of the area of the tension curtain.

Preferably, the tension curtain comprises a plurality of tension elements. Preferably, the tension curtain contains a plurality of first attachment means. Preferably, the tension curtain comprises a plurality of second attachment means.

Preferably, the first attachment means is arrangeable to releasably couple the tension element to the material sheet. Preferably, the second attachment means is arrangeable to releasably couple the tension element to the material sheet. Preferably, the first and second attachments means cooperate with one another to releasably couple the tension element to the material sheet.

Preferably, the second attachment means is arrangeable to cooperate with a first aperture of the material sheet. Preferably, the second attachment means is able to pass through the first aperture of the material sheet, whereas the tension element is unable to pass through the first aperture of the material sheet.

Preferably, the first attachment means comprises a hook adapted to cooperate with a second aperture of the material sheet. Preferably, in use, a first end of the hook passes through the second aperture, and the material sheet hangs from the hook.

Preferably, the hook comprises a second end adapted to cooperate with an aperture of the first attachment means. Preferably, in use, the second end of the hook passes through the first attachment means, and the hook hangs from the first attachment means.

Preferably, the hook is substantially "S" shaped.

Preferably, the hook, tension element and material sheet are arrangeable in use such that the material sheet is prevented from being unhooked from the first end of the hook by engagement of the first aperture with the tension element.

Preferably, the tension curtain comprises a vehicle tension curtain.

According to a second aspect of the invention there is provided a vehicle comprising a tension curtain according to first aspect of the invention.

According to a third aspect of the invention there is provided a method of renewing a tension curtain comprising steps of: releasing a material sheet from a tension element of the tension curtain; and recoupling a material sheet to the tension element characterised is that the tension element comprises part of a secondary sheet.

### Brief Description of the Drawings

For a better understanding of the invention, and to show how embodiments of the same may be carried into effect, reference will now be made, by way of example, to the accompanying diagrammatic drawings in which:
Figure 1 shows a side view of a vehicle including a tension curtain according to a first embodiment of the present invention, with the curtain drawn aside to allow loading/unloading.
Figure 2 shows a rear perspective view of a portion of the tension curtain of Figure 1;
Figure 3 shows a front perspective view of a portion of the tension curtain of Figure 1;
Figure 4 shows a rear perspective view of the tension curtain hanger assembly of Figure 2;
Figure 5 shows a perspective view of the roller and hanger body of the hanger assembly of Figure 2;
Figure 6 show a perspective view of the hook of the hanger assembly of Figure 2;
Figure 7 shows a perspective view of the clamp of the hanger assembly of Figure 2;
Figure 8 shows a side view of the hanger assembly and the first and secondary sheets of the tension curtain of Figure 1;
Figure 9 shows a side view of a second preferred hanger assembly in place with a support rail and a tension curtain according to an embodiment of the present invention;
Figure 10 shows a perspective view of the roller and hanger body of the hanger assembly of Figure 9;
Figure 11 shows a perspective view of the hanger assembly of Figure 9 in place with a support rail;
Figure 12 shows a side view of a third preferred hanger assembly in place with a support rail and a tension curtain according to an embodiment of the present invention;
Figure 13 shows a perspective view of the roller and hanger body of the hanger assembly of Figure 12;
Figure 14 shows a front view of the hanger assembly of Figure 12 in place with a support rail; and
Figure 15 shows a rear perspective view of a tension curtain according to a second embodiment of the present invention.

### Description of the Preferred Embodiments

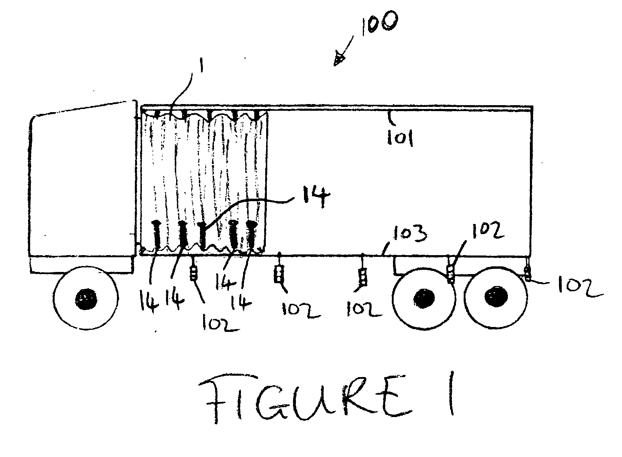

Figure 1 shows a tension curtain 1 incorporated into a vehicle 100. The tension curtain 1 is shown drawn aside to allow loading/unloading of the vehicle 100. The tension curtain 1 is coupled to a first support structure. The first support structure comprises an upper support structure in the form of a support rail 101 at an edge of a vehicle roof. The tension curtain 1 can be drawn along the support rail 101 into place as a vehicle side. The vehicle 100 is provided with a plurality of buckles 102 comprising part of a lower support structure 103. The buckles 103 are spaced apart along the length of the vehicle side and are shown in Figure 1 hanging from buckle straps 14. To secure the tension curtain 1 in place as a vehicle side, each of the straps 14 is retained in a buckle 102 forcing the buckles 102 up and against the tension curtain 1.

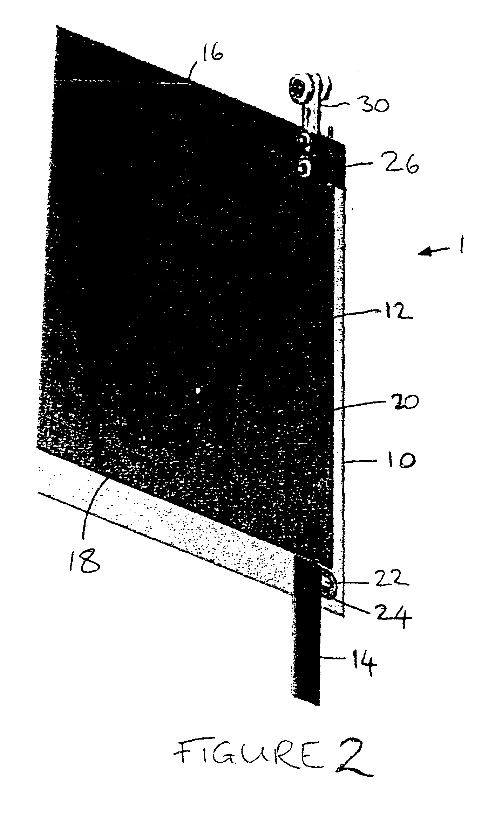

Referring now to Figure 2 there is shown a portion of the tension curtain 1 comprising a material sheet 10 comprising an outer portion of the tension curtain 1. Hereinafter, the material sheet 10 is referred to as the first sheet 10. The tension curtain 1 further comprises a secondary sheet 20, and first attachment means in the form of a hanger assembly 30. The secondary sheet 20 comprises sheet material, a tension element 12, a second attachment means in the form of a strap 14, upper and lower edge reinforcement members 16,18. The first sheet 10 comprises a first aperture 22 reinforced by an eyelet 24, and, an upper reinforcement member 26. The hanger assembly 30 is fixed to the secondary sheet 20 through the upper reinforcement member 16. The first sheet 10 is releasably coupled to the hanger assembly 30.

To secure the tension curtain 1 in place as a vehicle side, the straps 14 are passed through the first apertures 22, and retained in the buckles 102. Applying tension to the straps 14 stretches the tension elements 12 of the secondary sheet 20. The first sheet 10 is held against the secondary sheet 20 and a smooth, resilient surface is produced. The tension elements 12, the straps 14 and the secondary sheet reinforce the first sheet 10. Together, the hanger assemblies 30 and the straps 14 cooperate with the upper and lower support structures 101,103 and comprise first and second attachment means suitable for securing the tension curtain to the upper and lower support structures 101,103.

The straps 14 and apertures 22 of the tension curtain 1 are configured to cooperate with the buckles 102 such that when the tension curtain 1 is secured in place the buckles 102 lie against the first sheet 10 at a predetermined height above the lower support structure 103. Superficially, this gives the tension curtain 1 a similar appearance to that of a known tension curtains. With this arrangement, the area of material required for the secondary sheet 20 is less than that is required for the first sheet 10, reducing the cost of producing the secondary sheet 20. The first sheet 10 extends beyond the lower edge of the secondary sheet 20, with the buckle straps 104 reinforcing the portion of the tension curtain 1 below the apertures 22.

Another arrangement of straps 14 and apertures 22 (not shown) is envisaged, with the apertures 22 located as close to the lower support structure 103 as possible. In this arrangement, the buckles 102 are located on the vehicle side below the lower support structure 103. The first sheet 10 is substantially the same size as the secondary sheet 20 such that the secondary sheet 20 reinforces substantially the whole of the area of the tension curtain 1 including the lowermost portions. By locating the buckles 102 on the vehicle side below the lower support structure 103, the tension curtain 1 comprises a smooth, easy to clean surface with increased aerodynamic efficiency.

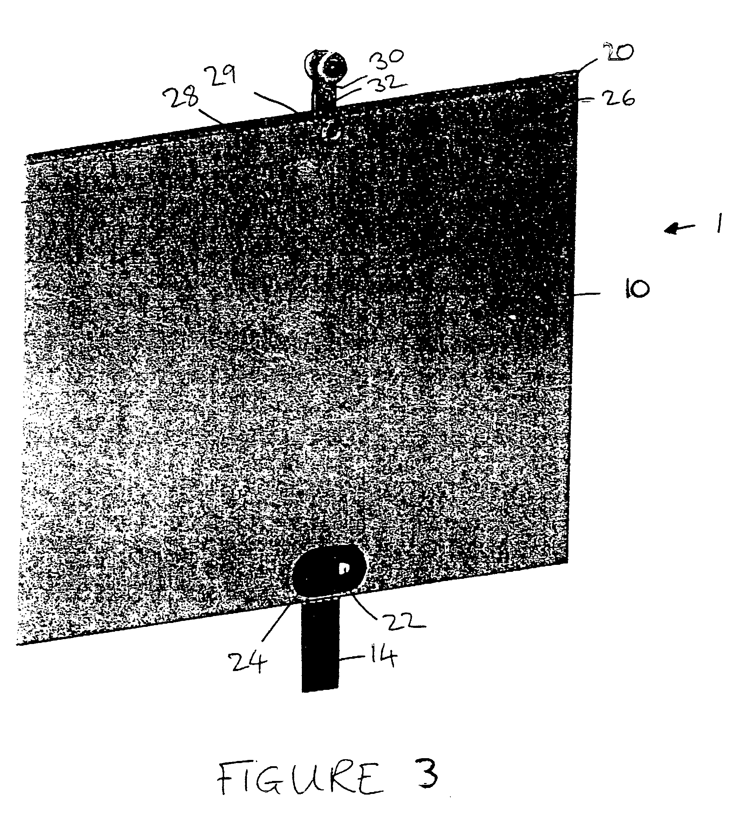

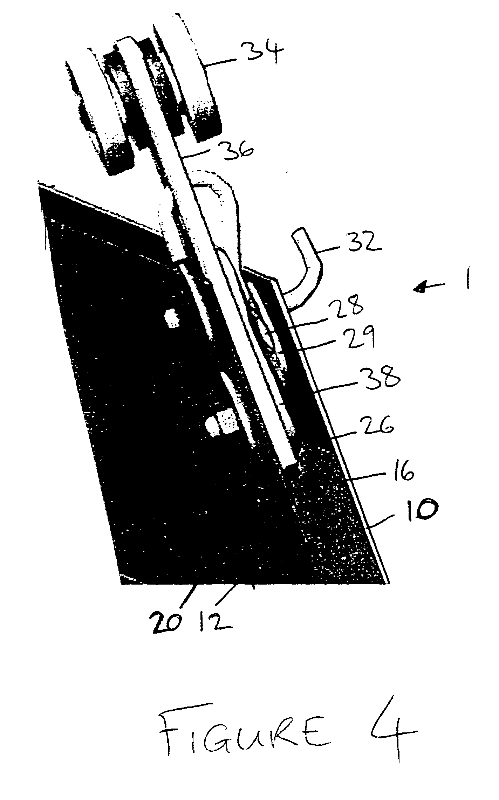

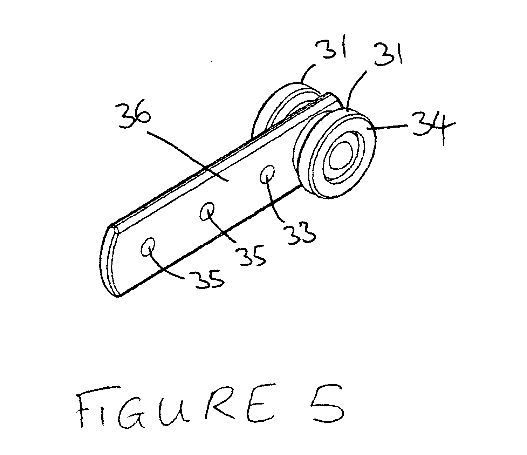

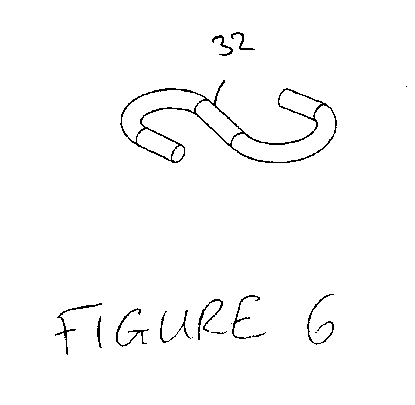

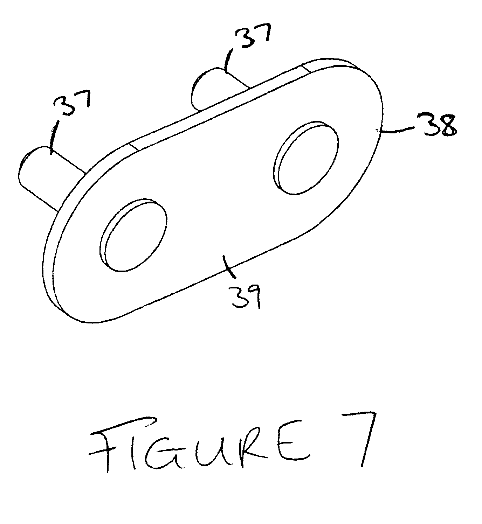

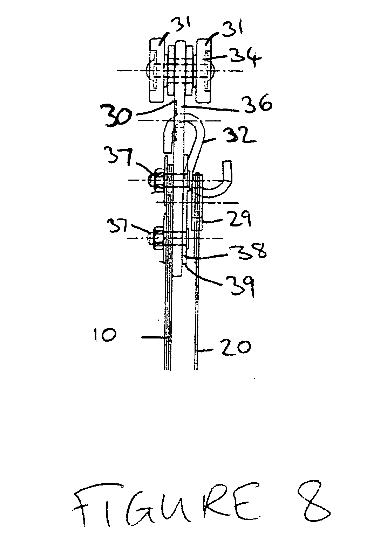

Figure 3 shows a front view of a portion of the tension curtain 1 of Figure 1. A hanger assembly 30 comprises retaining means in the form of a hook 32 which cooperates with a second aperture 28 in the first sheet 10 and the upper reinforcement member 26 to releasably couple the first sheet 10 to the hanger assembly 30. The second aperture 28 is reinforced with an eyelet 29.

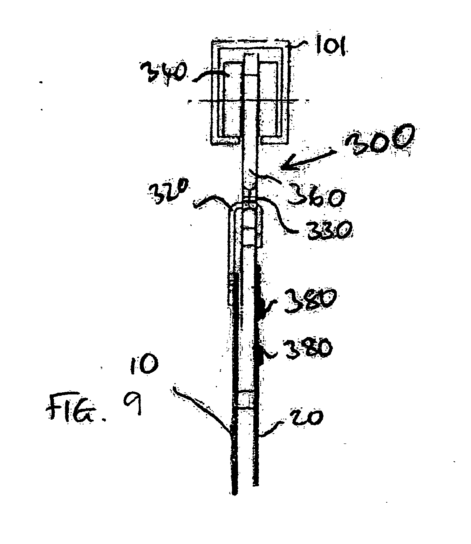

Figure 4 shows the hanger assembly 30, comprising the hook 32, a roller 34, a hanger body 36 and a clamp 38. The hanger assembly 30 allows the tension curtain 1 to be connected to the support rail 101. In particular, the roller 34 is arranged to cooperate with the support rail 101 to enable the tension curtain 1 to be drawn easily. The hanger body 36 receives the roller 34 at a first end, and at a second end cooperates with the clamp 38 to retain the secondary sheet 20. In addition, the hanger body 36 receives the hook 32, allowing the first sheet 10 to be releasably coupled to the hanger assembly 30.

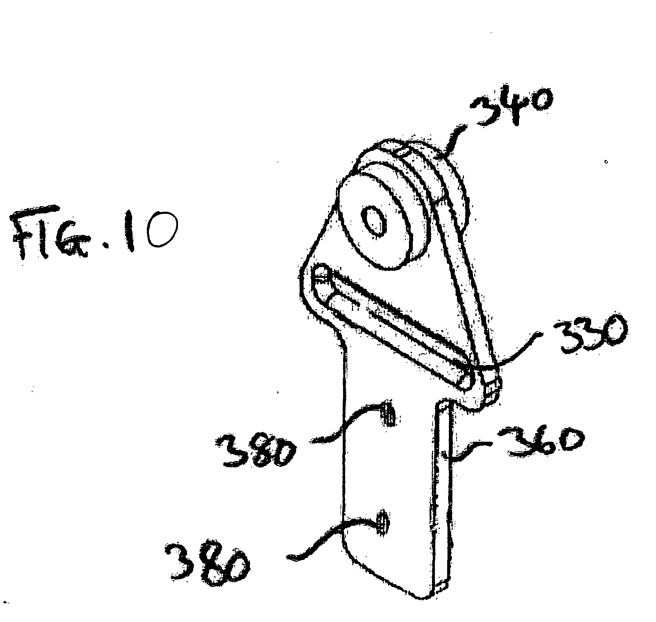

Figure 5 shows the roller 34 and hanger body 36 of the hanger assembly 30. The roller 34 comprises a pair of substantially cylindrical elements 31 pivotally attached to the first end of the hanger body 36. The hanger body 36 further comprises a central aperture 33 to in use receive the hook 32. At its second end, the hanger body 36 comprises clamping apertures 35 to in use receive the clamp 38.

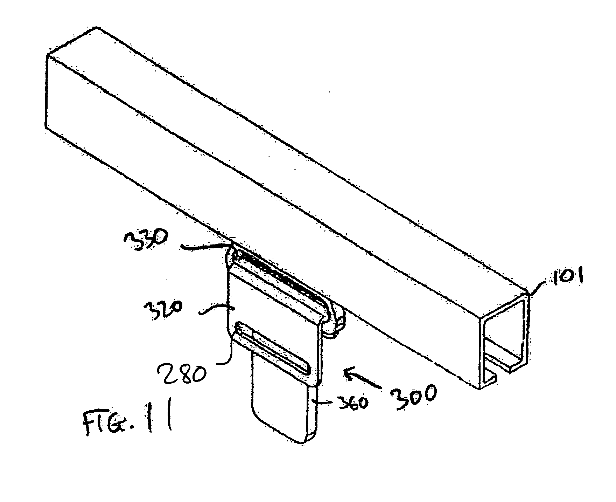

Figure 6 shows the hook 32 of the hanger assembly 30. The hook 32 is substantially "S" shaped. A first end of the hook 32 is received in the second aperture 28 in the first sheet 10 and the upper reinforcement member 26, and a second end of the hook 32 is received by the central aperture 33 of the hanger body 36.

Figure 7 shows the clamp 38 of the hanger assembly 30. The clamp 38 comprises threaded protrusions 37 extending from a clamping plate 39. The threaded protrusions 37 are arranged to be passed through the clamping apertures 35 at the second end of the hanger body 36.

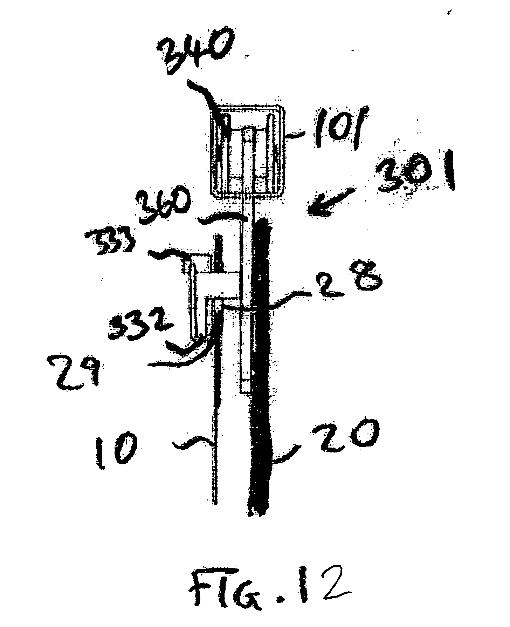

Figure 8 shows a side view of the hanger assembly 30 assembled with the and the first and second sheets 20,10. The threaded protrusions 37 of the clamping plate 39 extend through the clamping apertures 35 at the second end of the hanger body 36. The threaded protrusions 37 also extend through the upper reinforcement member 16 of the secondary sheet 20. Washers and nuts 37A fix the clamping plate 39 to the hanger body 36, and also fix the secondary sheet 20 to the hanger body 36. The hook 32 transfers the weight of the first sheet 10 to the hanger body 36.

The secondary sheet 20 is fixedly attached to the hanger body 36 of the hanger assembly 30, and in particularly preferred embodiments comprises a tough mesh base curtain. Preferably, the second sheet 20 comprises an inner layer of the tension curtain 1. The secondary sheet 20 is resistant to accidental and deliberate damage, and is preferably strong enough to prevent loose loads within a vehicle from damaging the tension curtain. Suitable materials for the secondary sheet 20 comprise PVC coated mesh materials. Suitable PVC coated mesh materials are available over a range of strength, weight and other characteristics. Other materials can be used, with the material for the secondary sheet 20 chosen according to required strength, weight and other characteristics. The tension element 12 comprises PVC coated webbing, as do the upper and lower reinforcement members 16,18. The tension element 12 and the upper and lower reinforcement members 16,18 are suitably bonded to secondary sheet by high frequency welding. Alternatively, the tension element 12 and the upper and lower reinforcement members 16,18 may be sewn into, adhered to or formed integrally with the secondary sheet 20. The secondary sheet 20 extends down from the hangers 30 to the level of the first apertures 22 of the first sheet 10. Below the first apertures 22 the first sheet 10 is reinforced by the straps 14. This allows a reduction in the amount of material required for the secondary sheet 20.

The secondary sheet 20 may be provided in a range of predetermined dimensions, with sheets from the range used with first sheets that are made to measure for a particular application. Furthermore, a standard size secondary sheet 20 may be provided to be cut down to size to fit a particular application. These approaches reduce the complexity of providing a curtain to for a particular application, and therefore reduce the costs associated with providing a curtain.

The first sheet 10 typically comprises PVC, although any other suitable plastics or non-plastics sheet materials could be used.

Preferably, the first sheet 10 comprises an outer layer of the tension curtain 1. The first sheet 10 can be easily removed from the hanger assembly 30 when the tension curtain 1 is unstressed. To remove the first sheet 10, the second aperture 28 is simply unhooked from the first end of the hook 32. To attach the first sheet 10, the second aperture 28 is hooked onto the first end of the hook 32. When the tension curtain 1 is secured in place by applying tension to the strap 14 the first sheet 10 is held against the secondary sheet 20. The first sheet 10 can not be removed when the strap 14 is passed through the first aperture 22 and buckled in place. The first sheet 10 is prevented from being raised and unhooked from the first end of the hook 32 by engagement of the eyelet 24 with a lower edge of the secondary sheet 20.

The first sheet 10 can be easily replaced, independent of the secondary sheet 20 and hanger assembly 30. As replacement of the first sheet 10 does not require replacement of the tension element 12, the hanger assembly 30, the strap 12 or any buckles, it can be achieved at substantially lower cost than is involved in replacement of existing vehicle tension curtains.

Different types of first sheet 10 can be used as part of the tension curtain 1, for example, due to different seasonal demands. Furthermore, the first sheet 10 can be easily reversed if desired. Reversibility of the first sheet 10 allows a vehicle fitted with the tension curtain 1 to have two different appearances depending on the orientation of the first sheet 10. In particular, the first sheet 10 can be sign written with a first design or logo on one side, and a second design or logo on the other side. By sign writing different first and second designs on each side of the first sheet 10, a vehicle fitted with the tension curtain 1 is able to easily assume two different appearances by reversal of the first sheet 10. Additional benefits of the tension curtain 1 include the absence of buckles or other substantial hardware on the first sheet 10. This makes sign writing the tension curtain 1 easy, enables thorough cleaning of the tension curtain to be easily carried out, and, as previously mentioned, reduces replacement costs in the event of degradation/damage to the outer layer.

The method of renewing a tension curtain by releasing a material sheet from the tension element(s) and recoupling a material sheet to the tension elements includes replacement of the material sheet with another sheet, reversal of the material sheet, or release of the material sheet for inspections, repair, maintenance, cleaning, signwriting or other purposes followed by recoupling of the same material sheet.

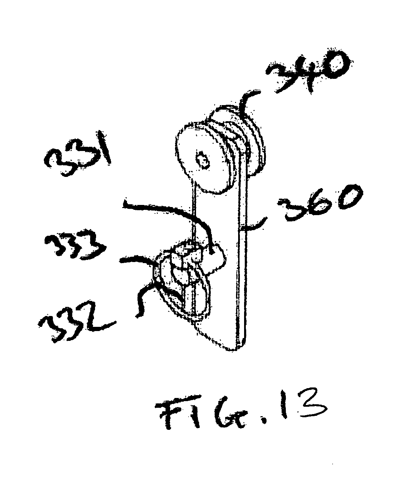

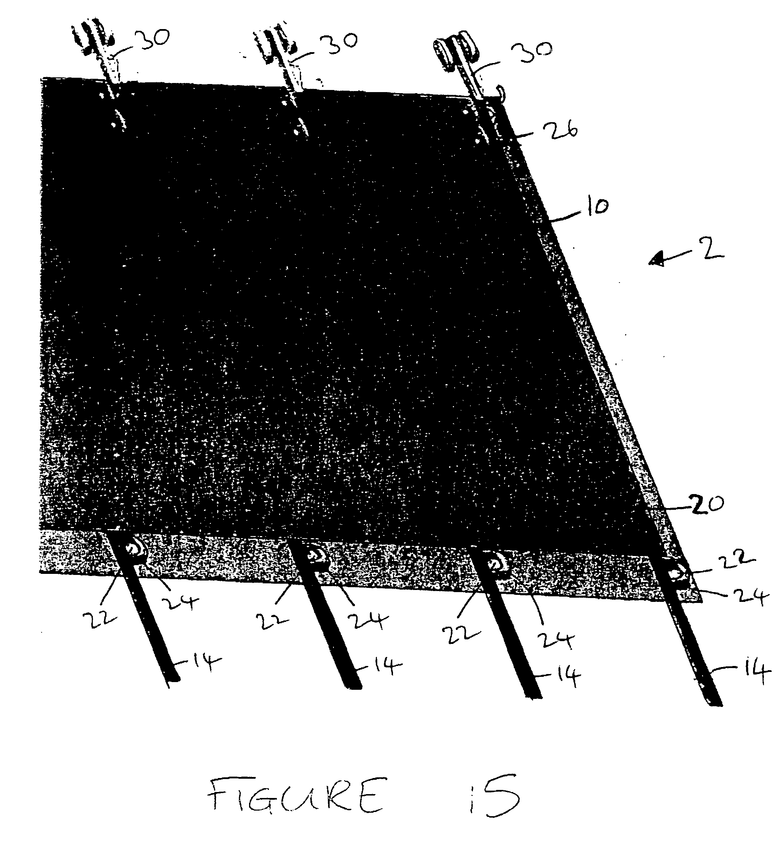

Alternative arrangements of hanger assembly 30 are shown in Figures 9 to 14. Referring now to Figures 9, 10 and 11 there is shown a hanger assembly 300 comprising a hooked plate 320, a roller 340, a hanger body 360 and rivets 380. As with the hanger assembly 30 described in relation to the embodiments of Figures 1-8, the hanger assembly 300 shown in Figures 9-11 cooperates with the support rail 101 and allows the tension curtain 1 to be drawn. However, the hook 32 is replaced with a hooked plate 320 attached to the first sheet 10 at a first slot 280. The hooked plate 320 can be located in a slot 330 in the hangar body 360 to releasably couple the first sheet 10 to the hanger assembly 300, whereas the secondary sheet 20 is coupled to the hanger body 360 by the rivets 380. The slot 330 provides a large area over which load from the first sheet 10 can be transferred to the hanger assembly 300.

The first sheet 10 is prevented from being raised and unhooked from the slot 330 by engagement of the eyelet 24 with a lower edge of the secondary sheet 20. However an additional securement means may be provided on the hooked plate in the form of a leaf spring coupled to a side of the plate opposite the hook and biased against the hook. In use the spring is deflected by engagement of the hook with the slot 330 and then provides a frictional engagement with the hanger body 360.

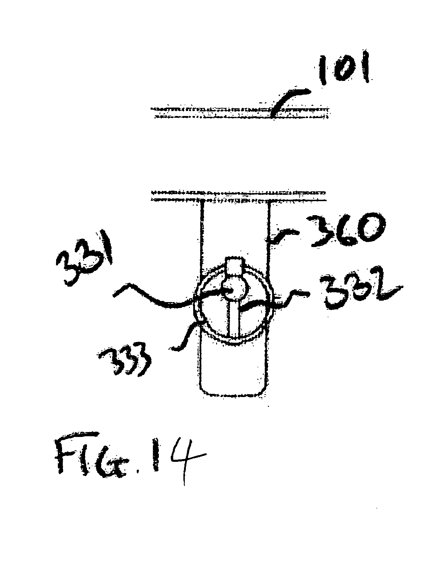

Figures 12, 13 and 14 show a hanger assembly 301 comprising a locking pin 332, a roller 340, and a hanger body 360 comprising a peg 331. The hanger assembly 301 shown in Figures 12-14 cooperates with the support rail 101. The hook 32 is replaced with the peg 331 and a locking pin 332. The aperture 280 is placed over the peg 311, and releasably couples the first sheet 10 to the hanger assembly 301. The first sheet 10 is prevented from being disengaged from the hanger assembly 301 by placing the locking pin 332 through an aperture in the peg 331. The locking pin 332 can comprise a split pin, or a pin including a locking ring 333 as shown in the Figures. The secondary sheet 20 is conveniently coupled to the hanger body 360 by rivets.

Figure 15 shows a second embodiment of the present invention, comprising a tension curtain 2. The tension curtain 2 comprises four tension elements 12, and correspondingly four straps 14, first apertures 22 and eyelets 24. Furthermore, the tension curtain 2 comprises three hanger assemblies 30. The number and relative position of tension elements and hanger assemblies can be easily varied to give tension curtains of a desired size, strength or other characteristics.

Tension curtains for vehicular use according to embodiments of the present invention typically fall within a range of sizes from 3m long by 2m high up to 15m long by 4m high. The lower end of the range comprises a tension curtain suitable for a small van, whereas the upper end of the range comprises a tension curtain suitable for a large trailer.

Although the present invention has been described in relation to tension curtains suitable for vehicular use, it can be applied to other tension curtains, for example closures for doors, containers etc.

## Claims

1. A tension curtain (1) comprising: a tension element (12) and a material sheet (10), wherein the tension element (12) is releasably coupleable to the material sheet (10), and **characterised in that** the tension element (12) comprises part of a secondary sheet (20).

2. The tension curtain of claim 1, further comprising first attachment means coupled to the tension element (12), wherein the first attachment means is suitable for attaching the tension curtain (1) to a first support structure and second attachment means suitable for attaching the tension curtain (1) to a second support structure.

3. The tension curtain of claim 2, wherein the first attachment means comprises a hanger assembly (30) suitable for attaching the tension curtain (1) to a support rail (101).

4. The tension curtain of claims 2 or 3, wherein the first and second support structures comprise upper and lower support structures respectively.

5. The tension curtain of any preceding claim, wherein the material sheet (10) comprises an upper reinforcement member (26).

6. The tension curtain of any preceding claim, wherein the tension element (12) is arranged, in use, to reinforce the material sheet (10) from bottom to top.

7. The tension curtain of any preceding claim, wherein the tension element (12) is integral with the secondary sheet (20).

8. The tension curtain of any preceding claim, wherein the secondary sheet (20) comprises a mesh sheet.

9. The tension curtain of any one of any preceding claim, wherein the secondary sheet (20) comprises upper and lower reinforcement members (16, 18).

10. The tension curtain of any preceding claim, wherein the tension element (12) is arranged to run between the upper and lower edges of the secondary sheet.

11. The tension curtain of any preceding claim comprising a plurality of tension elements (12), a plurality of first attachment means and a plurality of second attachment means.

12. The tension curtain of any preceding claim wherein the first attachment means is arrangeable to releasably couple the tension element (12) to the material sheet (10).

13. The tension curtain of any preceding claim, wherein the second attachment means is arrangeable to releasably couple the tension element (12) to the material sheet (10).

14. A vehicle comprising a tension curtain according to any one of claims 1 to 13.

15. A method of renewing a tension curtain according one of the claims 1-13 comprising steps of: releasing the material sheet (10) from the tension element (12) of the tension curtain; and recoupling another material sheet to the tension element (12).

## Patentansprüche

1. Spannbarer Vorhang (1) mit einem Spannelement (12) und einer Werkstoffplane (10), wobei das Spannelement (12) mit der Werkstoffplane (10) lösbar verbindbar ist, **dadurch gekennzeichnet, dass** das Spannelement (12) ein Teil einer Sekundärplane (20) ist.

2. Spannbarer Vorhang nach Anspruch 1, der weiterhin erste Befestigungsmittel aufweist, die mit dem Spannelement (12) verbunden sind, wobei die ersten Befestigungsmittel für die Befestigung des spannbaren vorhangs (1) an einer ersten Tragestruktur geeignet sind und zweite Befestigungsmittel für die Befestigung des spannbaren Vorhangs (1) an einer zweiten Tragestruktur geeignet sind.

3. Spannbarer Vorhang nach Anspruch 2, bei dem die ersten Befestigungsmittel eine Aufhängebaugruppe (30) aufweisen, die für die Befestigung des spannbaren Vorhangs (1) an einer Trageschiene (101) geeignet ist.

4. Spannbarer Vorhang nach Anspruch 2 oder 3, bei dem die erste und die zweite Tragestruktur eine obere bzw. eine untere Tragestruktur hat.

5. Spannbarer Vorhang nach einem der vorhergehenden Ansprüche, bei dem die Werkstoffplane (10) ein oberes Verstärkungselement (26) aufweist.

6. Spannbarer Vorhang nach einem der vorhergehenden Ansprüche, bei dem das Spannelement (12) im Gebrauch so angeordnet ist, dass die Werkstoffplane (10) von unten bis oben verstärkt wird.

7. Spannbarer Vorhang nach einem der vorhergehenden Ansprüche, bei dem das Spannelement (12) integral mit der Sekundärplane (20) ausgebildet ist.

8. Spannbarer Vorhang nach einem der vorhergehenden Ansprüche, bei dem die Sekundärplane (20) eine Netzplane ist.

9. Spannbarer Vorhang nach einem der vorhergehenden Ansprüche, bei dem die Sekundärplane (20) obere und untere Verstärkungselemente (16, 18) aufweist.

10. Spannbarer Vorhang nach einem der vorhergehenden Ansprüche, bei dem das Spannelement (12) so angeordnet ist, dass es zwischen der unteren und der oberen Kante der Sekundärplane verläuft.

11. Spannbarer Vorhang nach einem der vorhergehenden Ansprüche, der mehrere Spannelemente (12), mehrere erste Befestigungsmittel und mehrere zweite Befestigungsmittel aufweist.

12. Spannbarer Vorhang nach einem der vorhergehenden Ansprüche, bei dem die ersten Befestigungsmittel so angeordnet werden können, dass das Spannelement (12) mit der Werkstoffplane (10) lösbar verbunden wird.

13. Spannbarer Vorhang nach einem der vorhergehenden Ansprüche, bei dem die zweiten Befestigungsmittel so angeordnet werden können, dass das Spannelement (12) mit der Werkstoffplane (10) lösbar verbunden wird.

14. Fahrzeug, das einen spannbaren Vorhang nach einem der Ansprüche 1 bis 13 aufweist.

15. Verfahren zum Erneuern eines spannbaren Vorhangs nach einem der Ansprüche 1 bis 13, das die Schritte des Abnehmens der Werkstoffplane (10) vom Spannelement (12) des spannbaren Vorhangs und des Wiederverbindens einer anderen Werkstoffplane mit dem Spannelement (12) aufweist.

## Revendications

1. Rideau-bâche (1) à tendre, comprenant : un élément tenseur (12) et une feuille de matériau (10), dans lequel l'élément tenseur (12) peut être accouplé, de manière libérable, à la feuille de matériau (10), et **caractérisé en ce que** l'élément tenseur (12) fait partie d'une feuille secondaire (20).

2. Rideau-bâche à tendre selon la revendication 1, comprenant, en outre, un premier moyen d'attache accouplé à l'élément tenseur (12), le premier moyen d'attache étant approprié à attacher le rideau-bâche (1) à une première structure support, et un second moyen d'attache étant approprié à attacher le rideau-bâche (1) à une seconde structure support.

3. Rideau-bâche à tendre selon la revendication 2, dans lequel le premier moyen d'attache comprend un ensemble suspenseur (30) approprié â attacher le rideau-bâche (1) à un rail support (101).

4. Rideau-bâche à tendre selon la revendication 2 ou 3, dans lequel les première et seconde structures support réalisent, respectivement, des structures support supérieure et inférieure.

5. Rideau-bâche à tendre selon l'une quelconque des revendications précédentes, dans lequel la feuille de matériau (10) comprend un élément de renforcement supérieur (26).

6. Rideau-bâche à tendre selon l'une quelconque des revendications précédentes, dans lequel l'élément tenseur (12) est agencé, en service, pour renforcer la feuille de matériau (10) de bas en haut.

7. Rideau-bâche à tendre selon l'une quelconque des revendications précédentes, dans lequel l'élément tenseur (12) est d'un seul tenant avec la feuille secondaire (20).

8. Rideau-bâche à tendre selon l'une quelconque des revendications précédentes, dans lequel la feuille secondaire (20) comprend une feuille de matériau à mailles.

9. Rideau-bâche à tendre selon l'une quelconque des revendications précédentes, dans lequel la feuille secondaire (20) comprend des éléments de renforcement (16,18) supérieur et inférieur.

10. Rideau-bâche à tendre selon l'une quelconque des revendications précédentes, dans lequel l'élément tenseur (12) est agencé pour s'étendre entre les bords supérieur et inférieur de la feuille secondaire.

11. Rideau-bâche à tendre selon l'une quelconque des revendications précédentes, comprenant une pluralité d'éléments tenseurs (12), une pluralité de premiers moyens d'attache et une pluralité de seconds moyens d'attache.

12. Rideau-bâche à tendre selon l'une quelconque des revendications précédentes, dans lequel le premier moyen d'attache peut être agencé pour accoupler, de manière libérable, l'élément tenseur (12) à la feuille de matériau (10).

13. Rideau-bâche à tendre selon l'une quelconque des revendications précédentes, dans lequel le second moyen d'attache peut être agencé pour accoupler, de manière libérable, l'élément tenseur (12) à la feuille de matériau (10).

14. Véhicule comprenant un rideau-bâche à tendre selon l'une quelconque des revendications 1 à 13.

15. Procédé de renouvellement d'un rideau-bâche à tendre selon l'une quelconque des revendications précédentes 1 à 13, comprenant les étapes de : libération de la feuille de matériau (10) depuis un élément tenseur (12) d'un rideau-bâche ; et réaccouplement d'une autre feuille de matériau à l'élément tenseur (12).
